# EUROPEAN PATENT APPLICATION

(11) **EP 1 081 620 A2**
(43) Date of publication of application: **07.03.2001**
(21) Application number: 00307113.1
(22) Date of filing: 18.08.2000
(51) Int. Cl.: G06F 17/60

(54) **Area dependent information control apparatus and method**

(30) Priority: 01.09.1999 JP 24791799
(71) Applicant: Kabushiki Kaisha Toshiba, Kawasaki-shi, Kanagawa-ken (JP)
(72) Inventor: Doi, Miwako, c/o Intellectual Property Division, Minato-ku, Tokyo (JP); Sugiyama, Hiroshi, c/o Intellectual Property Div.T, Minato-ku, Tokyo (JP)
(74) Representative: O'Connell, David Christopher

(57) **Abstract**

A place data acquisition unit acquires location data of a user's present position. An information memory stores user request data from various kinds of daily information. An area dependent information memory stores position data of service executive places corresponding to the request data. A place comparison unit compares the location data with the position data in the area dependent information memory, and extracts the request data corresponding to the position data matched with the location data from the information memory. A presentation unit informs the user of the extracted request data.

## Description

### FIELD OF THE INVENTION

The present invention relates to an area dependent information control apparatus and a method for informing a user of request data in the user's daily life according to the user's present location.

### BACKGROUND OF THE INVENTION

By remarkable progress of computer technology and semiconductor technology, PCs (personal computers) are put to practical use by personal base. Furthermore, in proportion to the spread of mobile computers, a user often travels with a PC and utilizes the PC at the destination. As an intelligent terminal, PDAs (Personal Digital Assistants) and notebook size PCs are widely used. In this case, a PDA is the intelligent terminal for the user to bring personal data called PIM (Personal Information Management) such as personal schedule, address lists, and telephone directory.

A large number of persons execute control of personal schedule by using a PDA and PC, and it is higher in rank for application software. In PDA and PC, the schedule control is executed by program called scheduler. In the scheduler, an appointed item, a place name, a start time, an end time, an announcement time, are previously input by the user. For example, the announcement time is set as five minutes before the start time. Assume that the appointment "XX meeting is held in the A meeting room at 10:00" is input to the terminal. If the announcement time is set as five minutes before, the scheduller informs "XX meeting is held in the A meeting room at 10:00" to the user at 9:55. The user prepares XX meeting by hearing this information and goes to the A meeting room. Furthermore, if the user's transfer requires one hour because the meeting is held in another department office, it is necessary for the user to set the announcement time as one hour before when the user inputs the appointment. As mentioned-above, if the appointment is previously input, the scheduller informs the user of an event, and it is convenient for the user.

The scheduled information must be triggered based on time. Some information must be triggered based on the location rather than the time. For example, when the user is watching CM (advertisement) on TV, he/she knows a bargain sale of convenient life articles (○ ○ commodity), and remembers to buy the commodity. When the user actually goes to a supermarket, he/she wants to be reminded of purchasing the commodity without fail. In this case, if the user inputs a shopping memo "purchase of ○ ○ commodity" to PDA, the PDA informs the user of this shopping memo when the user goes to the supermarket. This event does not depend on the time schedule. This event must be triggered based on the location. However, the present scheduller can activate the appointment item based on the time only. Above-mentioned shopping memo lacks time information necessary for the scheduler. Accordingly, the scheduler of the prior art can not inform the user of this shopping memo irrespective of the time information.

Furthermore, by watching a displayed advertisement in a train or an advertisement on an electric-light pole or in the station, the user often knows an entertainment to be held in the near future or a new commodity. If the user is interested in the event, he/she inputs a content of the advertisement as the memo to the PDA. However, it often happens that the user can not input the memo because of various kinds of reasons. In this case, the user normally makes an effort to remember the content of the advertisement. Even if the user remembers the advertisement, he/she often can not recall the full content at a step of inputting the memo afterward. Alternatively, the user often forgets the content completely.

Recently, a digital camera is reasonable and handy, and many users utilize the digital camera instead of the memo by bringing it. However, even if the user takes a photograph of the advertisement by the digital camera, it is only image-based information. Therefore, the user must convert the content of the image-based information to the schedule data.

Furthermore, in the advertisement of leaflet or magazine, a coupon to purchase the commodity by discount or a premium ticket is often included if the user submits it to an indicated supermarket or retail store. However, if the user finds the coupon in the advertisement while busy, he/she can not cut off the coupon from the advertisement. Even if the user cuts off the coupon from the advertisement, he/she often forgets to bring it to the indicated store. Even if the user brings the coupon to the indicated store, he/she often forgets to purchase the target commodity.

Furthermore, a department store, a supermarket, a gas station, or an airline company often promotes a credit card to keep customers. If the customer purchases or utilizes a service by using the credit card of the same store or a chain store, he/she obtains points (it is called "my ledger") accumulated in proportion to the amount of payment. If these points are accumulated above a predetermined value, the customer can receive a privilege equal to the accumulated points. However, in this case, the customer must have plural kinds of credit cards, and remember which credit card is commonly used in which supermarket or which gas station in order to effectively utilize the service. In many cases, the customer can not remember such detail information, and he/she can not put it to practical use.

As mentioned-above, in PIM (personal information control) of the prior art, personal information is controlled by the time schedule. However, in the control along time axis, various kinds of request data in the user's daily life such as a shopping memo, a discount coupon of commodity, a purchase point (my ledger), are not effectively controlled. In short, as for the event necessary for the user while going out, it is impossible that the event is informed to the user at a good timing that the user executes the event.

Accordingly, in various kinds of daily life information irrelevant to the time information, an information control technique to extract necessary data from the user's memo and to inform the user of the necessary data at a good timing is greatly desired.

### SUMMARY OF THE INVENTION

It is an object of the present invention to provide an area dependent information control apparatus and a method to extract necessary data from the user's memo in daily life information and to inform the user of the necessary data at a good time.

According to the present invention, there is provided an area dependent information control apparatus, comprising: a place data acquisition unit configured to acquire location data of a user's present position; an information memory configured to store user request data as various kinds of daily information; an area dependent information memory configured to store position data of service executive places corresponding to the request data; a place comparison unit configured to compare the location data acquired by said place data acquisition unit with the position data stored in said area dependent information memory, and to extract the request data corresponding to the position data matched with the location data from said information memory; and a presentation unit configured to inform the user of the request data extracted by said location comparison unit.

Further in accordance with the present invention, there is also provided a method for controlling area dapendent information, comprising the steps of: storing user request data as various kinds of daily information in an information memory; storing position data of service executive places corresponding to the request data in an area dependent information memory; acquiring location data of a user's present position; comparing the location data with the position data stored in the area dependent information memory; extracting the request data corresponding to the position data matched with the location data from the information memory; and informing the user of the extracted request data.

Further in accordance with the present invention, there is also provided a computer readable memory containing computer readable instructions in a system to control area dependent information, comprising: an instruction means for causing a computer to store user request data as various kinds of daily information in an information memory; an instruction means for causing a computer to store position data of service executive places corresponding to the request data in an area dependent information memory; an instruction means for causing a computer to acquire location data of a user's present position; an instruction means for causing a computer to compare the location data with the position data stored in the area dependent information memory; an instruction means for causing a computer to extract the request data corresponding to the position data matched with the location data from the information memory; and an instruction means for causing a computer to inform the user of the extracted request data.

### BRIEF DESCRIPTION OF THE DRAWINGS

Fig. 1 is a block diagram of the area dependent information control apparatus according to a first embodiment of the present invention.
Fig. 2 is a flow chart of processing of activating information according to the first embodiment of the present invention.
Figs. 3A, 3B, 3C are schematic diagrams of memorized example in an area dependent information memory shown in Fig. 1.
Fig. 4 is a schematic diagram of memorized example in an information memory shown in Fig. 1.
Fig. 5 is a flow chart of processing of activating information according to a first modification of the first embodiment of the present invention.
Fig. 6 is a flow chart of processing of activating information according to a second modification of the first embodiment of the present invention.
Fig. 7 is a schematic diagram of an example of situation of the area dependent information control apparatus put on the user's body.
Fig. 8 is a flow chart of processing of storing memo data according to the first embodiment of the present invention.
Fig. 9 is a schematic diagram of an example of action data and place data in a table according to the first embodiment of the present invention.
Fig. 10 is a schematic diagram of an example of collection sheet of action place according to the first embodiment of the present invention.
Fig. 11 is a system component including the area dependent information control apparatus according to a second embodiment of the present invention.
Fig. 12 is a block diagram of the area dependent information control apparatus according to the second embodiment of the present invention.
Figs. 13A and 13B are schematic diagrams of memorized examples in the information memory and the area dependent information memory according to the second embodiment of the present invention.
Fig. 14 is a flow chart of processing of cash register apparatus according to the second embodiment of the present invention.
Fig. 15 is a schematic diagram of memorized example in the information memory according to a first modification of the second embodiment.
Fig. 16 is a system component including the area dependent information control apparatus according to a third embodiment of the present invention.
Figs. 17A, 17B, 17C are schematic diagrams of memorized examples in the information memory and the area dependent information memory according to the third embodiment of the present invention.
Fig. 18 is a block diagram of the area dependent information control apparatus according to a fourth embodiment of the present invention.
Fig. 19 is a flow chart of processing of storing data in the information memory according to the fourth embodiment of the present invention.
Fig. 20 is a schematic diagram of an example of input image according to the fourth embodiment of the present invention.
Fig. 21 is a schematic diagram of memorized example in the information memory shown in Fig. 18.

### DETAILED DESCRIPTION OF THE PREFERRED EMBODIMENTS

Hereinafter, embodiments of the present invention will be explained by referring to drawings. In the present invention, the user's request data in daily life is controlled not by time schedule but by two dimensional place information. An information control technique to support a presentation of information such as a shopping memo, a discount coupon, and my ledger, is newly presented. In this case, the place information may be represented as location on the earth such as latitude and longitude, or may be identification representing predetermined place and zone such as a convenience store, a supermarket, or a station neighboring to the user's house.

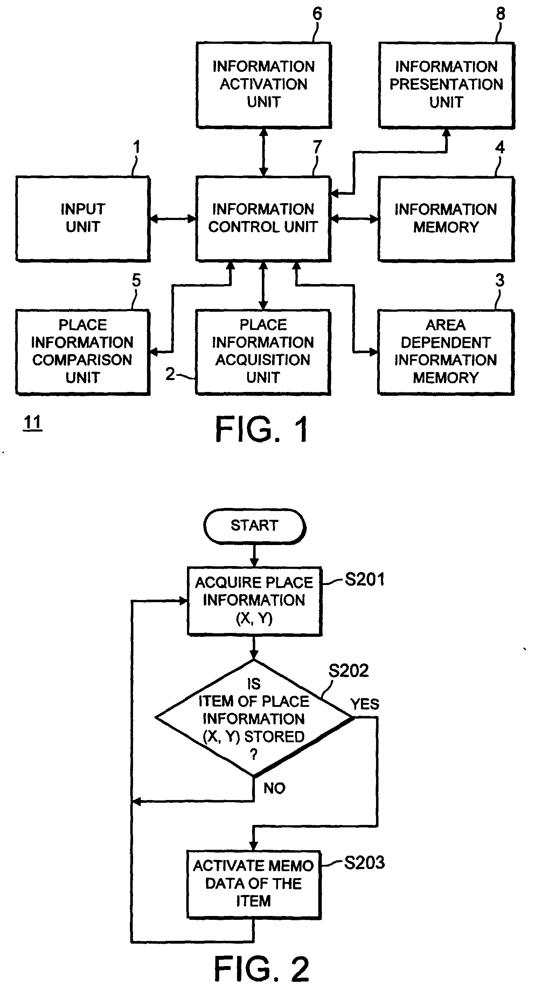

Hereinafter, the first embodiment of the present invention will be explained. Fig. 1 is a block diagram of the area dependent information control apparatus according to the first embodiment. As shown in Fig. 1, the area dependent information control apparatus 11 includes an input unit 1, a place information acquisition unit 2, an area dependent information memory 3, an information memory 4, a place information comparison unit 5, an information activation unit 6, an information control unit 7, and an information presentation unit 8. The input unit 1 inputs a shopping memo such as a commodity name to be purchased or a TV program name to watch by the user. An input method such as speech input or a key input is applicable to the input unit 1. The information memory 4 stores user memo information such as the shopping memo or the TV program list input from the input unit 1. The area dependent information memory 3 stores place information corresponding to the user memo information, which represents the user's location to inform the memo information to the user. The place information acquisition unit 2 acquires a present location data of the user. In order to decide the location of the user having this system, for example, by using GPS (grobal positioning system), PHS (personal handyphone system) or CDMA-One as one communication method of portable telephone, the location data such as longitude and latitude is acquired. Alternatively, "Bluetooth" as one method of a short distance wireless communication, IrDA as one method of infrared ray communication on wireless tag as transmitter, respectively transmits ID (identifier data) within a close range area. By receiving ID from these tools and comparing ID with a list for previously storing ID and location data, the location data may be acquired.

The place information comparison unit 5 compares the location data acquired by the place information acquisition unit 2 with each of the place information stored in the area dependent information memory 3. If the location data matches with one place information, the place information comparison unit 5 decides to activate a presentation of the user's memo information corresponding to the one place information in the information memory 4. The information activation unit 6 activates an operation of information presentation according to the decision result of the place information comparison unit 5. The information presentation unit 8 presents the memo data such as the shopping memo or the program list to the user by a display or a speaker according to the activation of the information activation unit 6. The information control unit 7 controls information exchange of each unit.

Fig. 2 is a flow chart of processing of the information activation according to the first embodiment. In this system, the user registers the memo data (the user's request data) in the information memory 4. For example, the memo data is "buy a commuting ticket", "buy bathroom deodorant", "buy a magazine XX". If this memo data is input from the input unit 1 by the user at registration mode, the memo data is registered in the information memory 4 and a memory address of this memo data is additionally registered. In this case, assume that the address to store "buy a commuting ticket" is p1, the address to store "buy bathroom deodorant" is p2. This item such as "buy a commuting ticket", "buy bathroom deodorant" is the memo data for the user to be associated. In this system, the memo data is respectively managed in relation to the place data. In case of the latitude and longitude, the place data is registered as (X1, Y1), (X2, Y2), ... (Xn: latitude, Yn: longitude). For example, assume that the latitude and longitude of the station is (X1, Y1), the latitude and longitude of the supermarket is (X2, Y2). The memo data "buy a commuting ticket" is related to the station, and the latitude and longitude of the station is (X1, Y1). (X1, Y1) must be related to address P1 of the memo data "buy a commuting ticket" in the information memory 4. Accordingly, (X1, Y1) is stored by the address P1 in the area dependent information memory 3. Furthermore, the memo data "buy bathroom deodorant" is related to the supermarket, and the latitude and longitude of the supermarket is (X2, Y2). (X2, Y2) must be related to address P2 of the memo data "buy bathroom deodorant" in the information memory 4. Accordingly, (X2, Y2) is stored by the address P2 in the area dependent information memory 3.

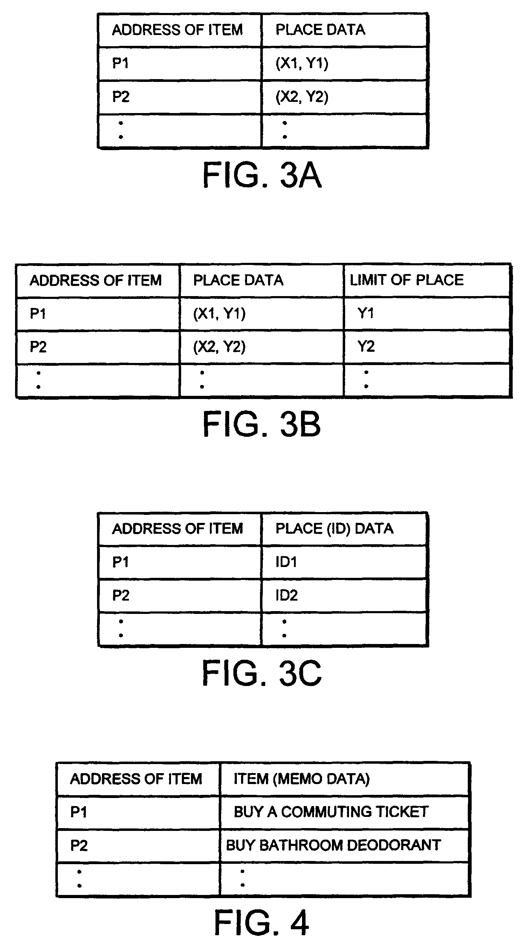

Next, under a situation that the memo data is registered, assume that the user goes out by bringing the present terminal apparatus 11 as a handy terminal. First, the place information acquisition unit 2 acquires the location data (x, y) (S201). In this example, (x, y) consisted of the latitude and longitude is acquired as the present location data of the terminal apparatus 11 by GPS included in the apparatus. In other words, the present location of the user is acquired. Next, after acquiring the location data, the place information comparison unit 5 compares the location data (x, y) with each place data stored in the area dependent information memory 3, and decides whether any memo data related to (x, y) is stored in the information memory 4 (S202). As shown in Fig. 3A, address of item (P1, P2, P3, ...) and the place data ((X1, Y1), (X2, Y2), (X3, Y3), ...) are correspondingly stored in the area dependent information memory 3. In this case, the address P1, P2, P3, ..., Pm, ..., Pn represents an address to store the association item (memo data) in the information memory 4. The place data (X1, Y1), (X2, Y2), (X3, Y3), ..., (Xm, Ym), ..., (Xn, Yn) represent the latitude and longitude value of the place to associate the memo data. By comparing the present location data (x, y) with each place data in the area dependent information memory 4, the place information comparison unit 5 decides whether the user locates a place to inform the memo data. If the present location data (x, y) is matched with one of the place data (X1, Y1), (X2, Y2), (X3, Y3), ..., (Xm, Ym), ..., (Xn, Yn), the memo data stored in address Pn related to the matched place data in the information memory 4 is activated. In this case, the place information comparison unit 5 supplies the address Pn related to the matched place data to the information control unit 7. The information control unit 7 extracts the memo data stored in the address Pn from the information memory 4 and supplies the memo data to the information presentation unit 8. For example, if the location data (x, y) is matched with (X1, Y1), the address related to (X1, Y1) is P1 in Fig. 3A. In this case, as shown in Fig. 4, the memo data stored at the address P1 in the information memory 4 is "buy a commuting ticket". Accordingly, this memo data "buy a commuting ticket" is extracted and presented through the presentation unit 8. In short, if the location data is matched with (X1, Y1), the address of memo data to be extracted is P1. If the location data is matched with (X2, Y2), the address of memo data to be extracted is P2. In Fig. 4, the memo data stored in address P1 is "buy a commutation ticket", and the memo data stored in address P2 is "buy bathroom deodorant". Accordingly, in case of the address P1, "buy a commuting ticket" is presented by the presentation unit 8, and in case of the address P2, "buy bathroom deodorant" is presented by the presentation unit 8.

A precision of the location data acquired by the place information acquisition unit 2 is about error 80 [m] in case of using GPS, error 40 [m] in case of using PHS, error 100 [m] in case of using CDMA-One. In order to rise up the precision, an electric wave by FM broadcasting is combined with the method of the place information acquisition unit 2. In short, position data of a plurality of transmission base stations to transmit the electric wave of FM broadcasting is used. For example, when the electric wave of FM broadcasting from the plurality of transmission base station is received, a position data of the user is calculated by intensity of received electric wave and a distance from the transmission base station according to a triangulation method. By referring to this position data, the location data acquired by the place information acquisition unit 2 is corrected, and the precision of measuring the location data is improved.

In case of using GPS, there are many places, such as indoors or underground, incapable of receiving the electric wave from a satellite. Furthermore, in a city, even if outdoors, the electric wave from necessary number of the satellites is often interrupted by a building and not received (In order to correctly calculate the location, the electric wave from at least three GPS satellites). As a result, the location is not calculated. Reversely, in case of using PHS, a service area per one base station is narrow, but its institution fee is inexpensive. In the city area, the base station is located by high density. In addition to this, in case of indoor public place, the base station of PHS is often located and useful in order to specify the location. However, in unprofitable area such as rural areas, the density to set the base station is low and a possibility not to specify the location occurs in such areas.

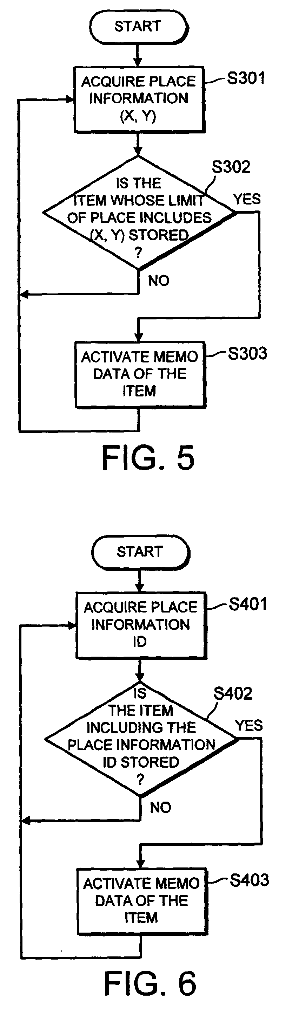

In order to avoid this problem, the place to associate the memo data is set as not only for the point but also for the area (zone). In this case, as shown in Fig. 3B, limit of place is stored in addition to the address of the item and the place data. For example, the limit of place is radius data (r1, r2, r3, ..., rm, ..., rn) in a circle whose center point is the corresponding place data. If the location data of the user having the system is included in the area, the memo data is presented to the user. Fig. 5 is a flow chart of processing of information activation according to this first modification of the first embodiment. First, the place information acquisition unit 2 acquires the location data (x, y) (S301). Next, the place information comparison unit 5 decides whether the location data (x, y) is included in a circle defined by the radius rn as a center position of the place data (Xn, Yn) in the area dependent information memory 3 (S302). In short, based on the center point of each place data ((X1, Y1), (X2, Y2), (X3, Y3), ..., (Xm, Ym), ..., (Xn, Yn)), it is decided whether the location data (x, y) of the user is included in each circle defined by each radius (r1, r2, r3, ..., rm, ..., rn). If the location data (x, y) is included in one circle, the memo data related to the place data as the center point in the one circle is activated (S303). For example, assume that the location data (x, y) is included in the circle defined by the radius rn and the center point (Xn, Yn), the place information comparison unit 5 extracts the address Pn related to the place data (Xn, Yn) from the area dependent information memory 3, and supplies the address Pn to the information control unit 7. The information control unit 7 extracts the memo data related to the address Pn from the information memory 4, and supplies the memo data to the presentation unit 8. In this way, as shown in Fig. 3B, in addition to the place data ((X1, Y1), (X2, Y2), (X3, Y3), ...) to associate the memo data, the limit area data based on the place data as a center position, for example, a radius data (r1, r2, r3, ... ) is set. When the user's present location is included in the limit area, the memo data related to the place data in the limit area is presented to the user. In this case, even if the density of acquired location data is low and the location data itself is shifted to some extent, it is only decided whether the location data is included in the limit area. Accordingly, when the user comes near the place position (Xn, Yn), the memo data is presented to the user without fail. The limit area may be automatically set by the information control unit 7 in proportion to the density of aquiring the location data.

In the above-mentioned example, the place data is represented as the latitude and longitude. The area dependent information control apparatus of the present invention is a navigation system to support the personal action. In short, the item which the user desires to act is timely informed to the user at a destination during the user's travels. In a car navigation system widely used, routes all over the United States are guided to the driver. In this case, the latitude and longitude are used to specify the location. However, in order to navigate human's action, the place data is not always limited to the latitude and longitude.

In a person's daily life, there are many places as action base. For example, the many places include a person's own house, a neighboring station of the house, a supermarket, a convenience store often used by the person, a book store, a movie theater, the person's office of employment, a neighboring station of the office of employment, and a transfer station on the way to the office. In order to specify the location data of these places, a short distance communication means such as " Bluetooth", IrDA or the communication tag to transmit ID peculiar to the place is previously set at corresponding place. When the user passes through the set place, ID transmitted by the short distance communication means is received by the user's handy terminal, and the present location of the user is decided by the received ID. In short, ID data is also sufficiently used as the place data.

As shown in Fig. 3C, ID peculiar to each place is stored as the place data instead of the latitude and longitude. Fig. 6 is a flow chart of processing of information activation according to this second modification of the first embodiment. The ID is registered in correspondence with the address P of the memo data.

First, assume that "Bluetooth", IrDA for infrared ray communication, or the wireless tag, are previously set at a street corner, inside and outside of the building, the station, and so on. These short distance communication means transmits ID (identifier peculier to the set place) within a close range area. Under such environment, when the user having this terminal apparatus moves in the close range area and the terminal apparatus is communicatable to the short distance communication means in the close range area, the place information acquisition unit 2 acquires ID transmitted by the short distance communication unit (S401).

Next, the place information comparison unit 5 decides whether the memo data related to the received ID is stored by referring to the area dependent information memory 3 (S402). In this case, it is checked whether the received ID matches one of the IDs in the area dependent information memory 3. If the received ID matches one ID, the memo data corresponding to the one ID is activated (S403). In short, the place information comparison unit 5 extracts the address Pn corresponding to the one ID from the area dependent information memory 3, and supplies the address Pn to the information control unit 7. The information control unit 7 extracts the memo data corresponding to the address Pn from the information memory 4 and supplies the memo data to the information presentation unit 8.

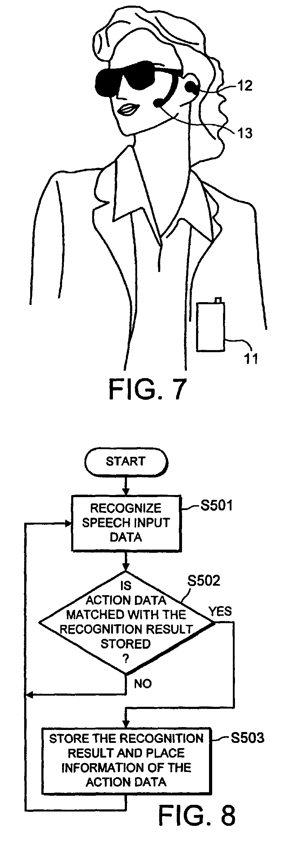

The presentation of the memo data is most effective for a user wearing a terminal apparatus as shown in Fig. 7. In Fig. 7, the user carries the present terminal apparatus as the wearable type. In this case, a main body 11 of the terminal apparatus is portable and fits into a pocket of the user's clothes. A headphone 12 is used as the information presentation unit 8, and a microphone is used as the input unit 1. The main body 11 is connected to outside by the short distance wireless system such as " Bluetooth".

For example, when the user notices that the bathroom deodorant is not enough while staying at home, the user utters "buy bathroom deodorant" through the microphone 13 in order to input the memo data to the main body 11. The main body 11 registers this memo data in the information memory 4 as shown in Fig. 4. Assume that the place data related to this memo data is (X2, Y2) in Fig. 3A or ID2 in Fig. 3C. When the user having the main body 11 goes out, the main body 11 receives the location data from the short distance wireless system set in the street and the present location of the user is decided. This received location data is compared with the place data ((X1, Y1), ..., (Xn, Yn)) in Fig. 3A or (ID1, ..., IDn) in Fig. 3C. If this received location data matches one place data, the memo data related to the one place data is presented to the user.

For example, when the user comes near the supermarket, the main body 11 receives the location data of the supermarket from the short distance wireless system, and this location data is matched with the place data ((X2, Y2) in Fig. 3A or ID2 in Fig. 3C) representing the supermarket in the area dependent information memory 4. In this case, the address P2 corresponding to the place data ((X2, Y2) or ID2) is extracted from the area dependent information memory 4. Then, the memo data "buy bathroom deodorant" stored at the address P2 is extracted from the information memory 4. This memo data is converted to speech data of natural dialogue such as "Buy bathroom deodorant without fail" and is output from the headphone 12. Accordingly, the user timely hears this message "Buy bathroom deodorant without fail." from the headphone and remembers to have a shopping item. At this time, the user is actually near the supermarket. Therefore, the user can immediately buy this informed commodity at the supermarket. In short, it is prevented that the user remembers this shopping item after passing the supermarket and returns to the supermarket. Furthermore, it is prevented that the user forgets the shopping item in spite of walking near the supermarket and disappoints afterwords.

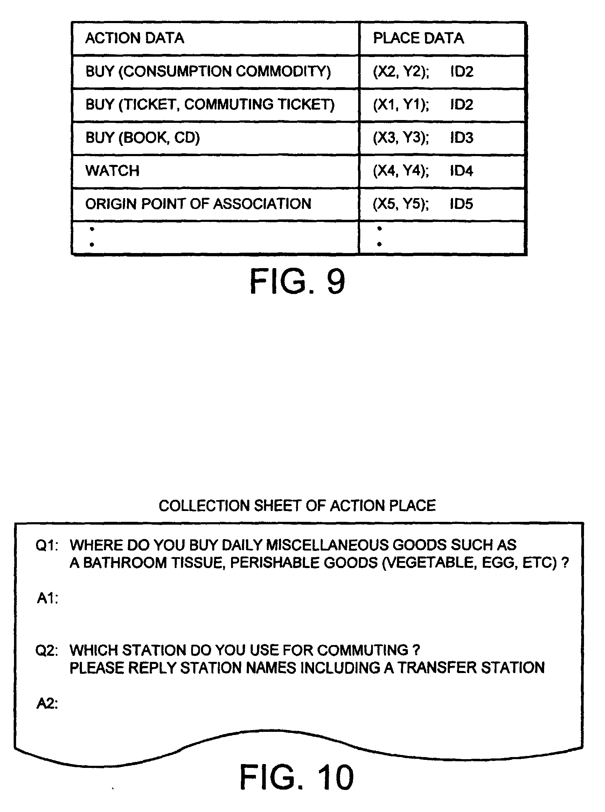

Next, a method to input memo data related to the user's daily item is explained. Fig. 8 is a flow chart of processing of inputting the memo data according to the first embodiment. For example, assume that the user notices that bathroom deodorant is not enough while cleaning. At this time, the user utters "buy bathroom deodorant" to the microphone in Fig. 7. In response to the user's utterance, a speech recognition unit (not shown in Fig.) equiped in the information control unit 7 recognizes the utterance (S501). As a result, a content of the utterance is decided as "buy bathroom deodorant". The speech recognition unit converts this content to character data, and the character data is stored in the information memory 4. Then, the information control unit 7 decides whether the character data as the recognition result includes action data (S502). The action data is a human's basis action, for example, "buy" or "watch". The basis action data is previously stored in an analysis dictionary as shown in Fig. 9.

In Fig. 9, "buy" and "watch" are stored as the action data. As for "buy", a place to buy is different from an object to buy. Therefore, a plurality of items "buy" are separately stored according to the kind of the object such a life consumption commodity (for example, vegetable, milk, bathroom deodorant), a kind of ticket to purchase at station (for example, ticket, commuting ticket), a kind of product to purchase at CD shop (for example, video tape, CD, book). This classification depends on the user's base place in daily life.

In Fig. 9, each action data is stored in correspondence with the latitude, longitude, and ID data. In this example, the action data and one place data are correspondingly stored in one item. However, the action data and a plurality of place data may be stored in one item. In case of ID as the place data, the supermarket or convenience store expanded all over the country is represented as one ID by unit of a series. In this case, the short distance wireless means such as "Bluetooth" or the wireless tag is set at the supermarket or the convenience store and transmits the ID of the series to which a particular store belongs. When the user goes near the supermarket or the convenience store of the series store which the user usually utilizes except for residence area of the user, the terminal apparatus of the user can receive the information. Accordingly, in case the series store puts to practical use of my ledger (purchase points) service, the user decides the series store to use my ledger even if the user goes to an unfamiliar area, and my ledger is easily stored for the user.

In the above example, the memo data is input by speech recognition. However, input method is not limited to the speech recognition. For example, a button corresponding to each of the user's basis action is previously installed in the system, and speech data of the action content is previously assigned to the button. When the user pushes the button, the speech data assigned to the button is stored as the speech memo data without recognition. The speech memo data is then presented as it is according to the user's location.

In this way, after obtaining the characters as the recognition result, the information control unit 7 decides whether the characters of the recognition result include the action data stored in a table shown in Fig. 9 and stores correspondingly the character data and the place data of the action data matched with the character data. At S502 in Fig. 8, a decision whether the characters include the action data is executed by content of the word in the characters. In this example, the characters of the recognition result are "buy bathroom deodorant", and includes the action data "buy". Furthermore, "bathroom deodorant" is a consumption commodity. As a result, the characters of the recognition result are matched with first item "BUY (CONSUMPTION COMMODITY)" in the table shown in Fig. 9. In this case, the place data in the first item is " (X2, Y2); ID2". As a result, the place data related to the memo data "buy bathroom deodorant" is stored as "(X2, Y2)" shown in Fig. 3A or "ID2" shown in Fig. 3C.

The action data and the place data which the user practices the action shown in Fig. 9 must be previously stored in the area dependent information control apparatus 11 of the user. This information is presented from a service server as a host system to the area dependent information control apparatus 11 of the user and actually stored in the area dependent information control apparatus 11. In Fig. 9, the action data and its place data are very private for the user, and standard data of the action data and the place data is not useful for the user. Therefore, in the present invention, in order to present a suitable data to a respective user, the user informs names of shops, stations, institutions in his/her daily life to the host system. The host system obtains the place data of the user's necessary shops, station, institutions by using the user's information and distributes the place data to the area dependent information control apparatus 11 of the user. This place data is stored in the table as shown in Fig. 9.

In order to obtain the information from the user, a collection sheet of action place shown in Fig. 10 is used. The user's replies to the collection sheet questions are transferred from the area dependent information control apparatus 11 as the user's terminal to the service server of the host system. By referring to the reply as the content of the questionaire, a relation data between the action data and its place data where the user practices the action is easily generated. First, the service server as the host system communicatable by wireless is prepared. Next, a proper noun such as a store, an institution, a station, or a public office and the existence location data such as the latitude, longitude, or ID representing the object institution are prepared in a database. In response to an inquiry from the area dependent information control apparatus 11 of the user terminal, assume that the service server extracts the corresponding data from the database and transmits the corresponding data to the terminal apparatus 11.

The service server or the information control unit 7 of the terminal apparatus 11 presents the collection sheet of action place to the user as shown in Fig. 10. For example, as for a question Q1 in Fig. 10, assume that the user replies "the supermarket OX store". As mentioned-above, the information control unit 7 in the terminal apparatus 11 includes an inquiry function for the user's reply. Accordingly, in response to the user's reply "the supermarket OX store", the information control unit 7 inquiries of the service server the place data of "the supermarket OX store". The service server extracts the latitude and longitude of "the supermarket OX store" nearest to the user's residence or ID representing "the supermarket OX store" from the database, and transmits this place data to the user's terminal apparatus 11. The information control unit 7 creates a correspondence table to store the action data and the place data as shown in Fig. 9. The correspondence table is stored in the area dependent information memory 3.

In the above-mentioned example, the place data to present the memo data is previously stored in correspondence with the action data. However, the place data is not limited to the stored data. For example, as for a kind of purchase commodity, it is only possible for the user to buy the commodity by passing another way different from his/her usual way home from the station. In this case, the memo data to purchase this commodity must be stored in correspondence with origin point of the user's daily action, and the user must change his/her usual action by hearing the memo data at the origin point. As shown in the fifth item of the correspondence table in Fig. 9, the origin point of association and the place data ((X5, Y5); ID5) are stored separately from normal action data. If the origin point is the station, the user hears the memo data at the station on his/her way home and passes on another way home to purchase the commodity.

As mentioned-above, in the first embodiment, if the user inputs the memo data to remember such as shopping memo in daily life, the memo data is automatically informed to the user when the user goes the place related to the memo data. Especially, in the present invention, the memo data dependent on the place (not the time) is correspondingly stored with the place data. The location data of the user's present position is continually acquired, and the memo data related to the location data is presented to the user. Accordingly, the user's memo data such as shopping is informed to the user at the most suitable place without fail. In other words, if the user's request data not managed by a mobile computer but written down as a memorandom in daily life, for example, a commodity name to purchase, is made as notes, the request data is stored in correspondence with the place data for the user to practice a content of the request data within the user's life area. In case of the user's going out, the request data is managed while the user's present location is acquired. When the user comes near a store that sells the commodity for the user to purchase, the request data to purchase the commodity is informed to the user. In short, it is very convenient, for the user such as a housewife to have something to do in detail such as shopping without fail in daily life.

In the first embodiment, the memo data such as shopping memo in daily life is simply stored. When the user comes near a place to practice a content of the memo data while the user is out, the memo data related to the place data is informed to the user. In the second embodiment, a system component to support the user to easily and effectively utilize a discount coupon for a commodity or a promotion such as my ledger is explained.

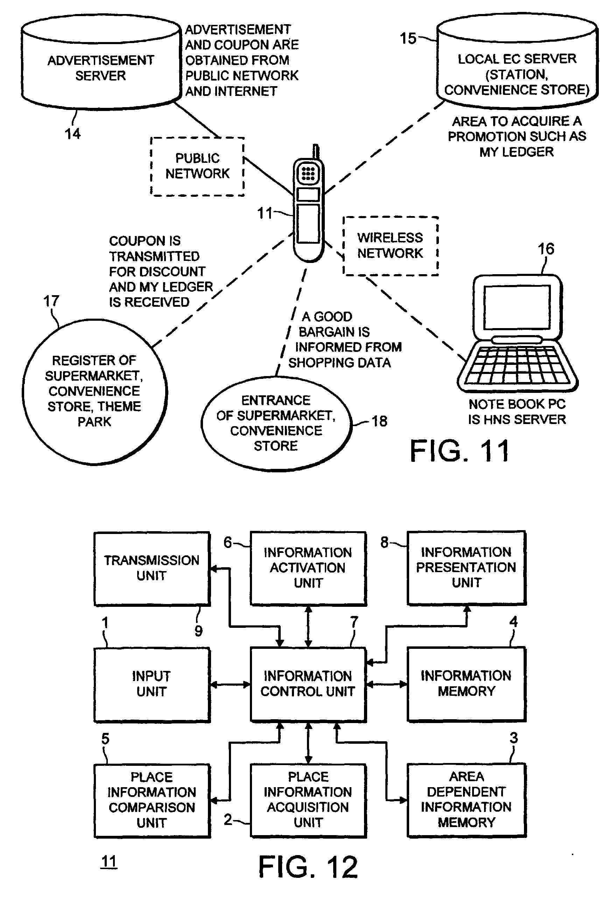

Fig. 11 is a system component including the area dependent information control apparatus as the user's handy terminal according to the second embodiment. Fig. 12 is a block diagram of the area dependent information control apparatus according to the second embodiment. In Fig. 12, in comparison with component of the terminal apparatus in Fig. 1, a transmission unit 9 is additionally included. The transmission unit 9 transmits and receives a wireless signal from "Bluetooth", IrDA, wireless tag, PHS, or CDMA-One and communicates to a server of the advertisement and a cash register of the supermarket.

In Fig. 11, the area dependent information control apparatus as the terminal apparatus 11 shown in Fig. 12 is located at the center position. The terminal apparatus 11 receives a discount coupon for commodities from an advertisement server 14 to distribute a content of the advertisement to a local EC server 15 set at the station or the convenience store through a public network or a local network in order for the user to easily obtain the discount. The terminal apparatus 11 reversely submits a promotion such as the user's my ledger to the server.

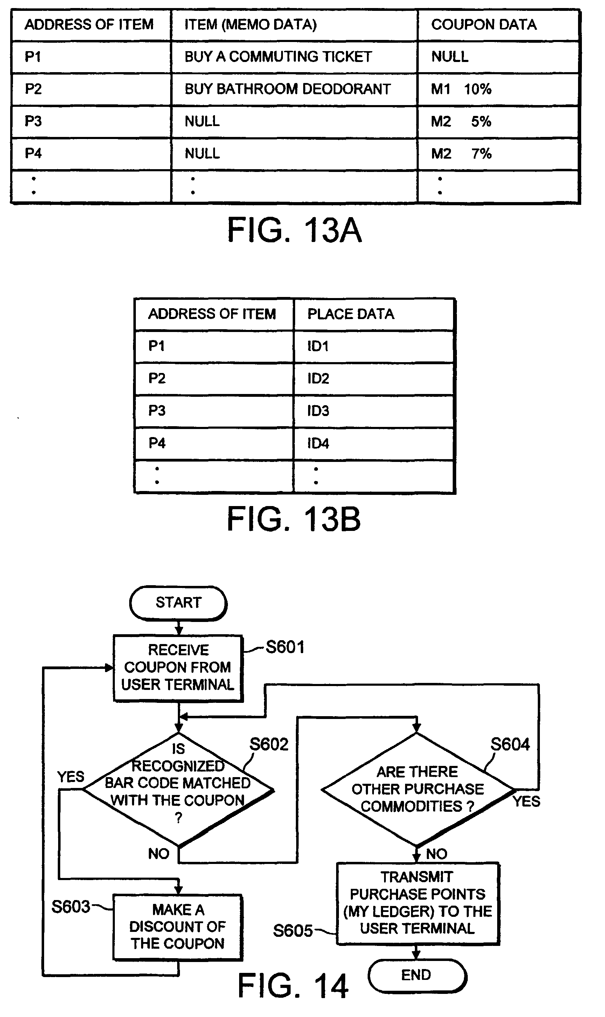

This terminal apparatus 11 includes an adhoc network to a cash register apparatus 17 of the supermarket and the advertisement server 14 in the station and can communicate to these units. In the terminal apparatus 11, the information memory 4 stores the memo data of shopping as explained in Fig. 4. As mentioned-above, the terminal apparatus 11 can communicate by connecting to the network. For example, after the terminal apparatus 11 connects to the network, the information control unit 7 searches the discount coupon related to the memo data stored in the information memory 4. If the discount coupon related to the memo data is found, this discount coupon is stored at address Pm corresponding to the memo data in the information memory 4 as shown in Fig. 13A.

The coupon data consists of numerical data and discount ratio data. The numerical data represents the numeral of barcode printed on the commodity. If the numeral is "n1", "n1" as the numeral data and the discount ratio of the commodity are stored at address Pm in the information memory 4. In Fig. 13A, "10%" as the discount ratio is stored. This coupon data may be supplied by a provider for which the user subscribes. In this case, various kinds of coupons may be supplied by push service. If the provider automatically supplies the various kinds of coupons to the terminal apparatus 11, the coupon data whose shopping item is "NULL" is stored as shown in Fig. 13A.

For example, if "bathroom deodorant" is an target commodity of the coupon, this object commodity is the consumption commodity, and the place data corresponding to the consumption commodity is automatically stored as shown in Fig. 13B. In this case, if "bathroom deodorant" is purchased in the same place mentioned-above, the memo data " bathroom deodorant" and the place data "ID2" are stored at same address P2.

Fig. 14 is a flow chart of processing by the cash register apparatus at accounting corner of the supermarket. For example, assume that the information memory 4 in the terminal apparatus 11 stores the coupon data as shown in Fig. 13A. First, the cash register apparatus receives the coupon data from the information memory 4 of the terminal apparatus 11 (S601). A cashier (a person in charge of register) at the cash register reads the commodity in a shopping basket of the user by using a barcode reader. By referring to a look up table (a table for storing a commodity name and a price) of the cash register apparatus, the commodity name corresponding to the barcode and the price are accumulated in a shopping specification. In this case, the cash register apparatus decides whether the barcode number of the commodity matches any coupon data read from the terminal apparatus 11 of the user (S602). If the barcode number matches coupon data, the discount ratio corresponding to the matched coupon data is extracted from the coupon data. For example, if the discount ratio is " 10%", the price is discounted by "10%" and the discounted price is accumulated in the shopping specification instead of a regular price (S603). After this processing is executed for all commodities in the shopping basket of the user (S604), the register apparatus calculates purchase points (my ledger) of accumulated price in the shopping specification and transmits the purchase points to the terminal apparatus 11 of the user (S605). In this way, the processing of the cash register apparatus finishes. In terminal apparatus 11, the transmission unit 9 receives the purchase points and the information memory 4 stores the purchase points at the address of this supermarket.

Furthermore, the coupon data may include the time data and the place data at which the user obtains this discount coupon, and the coupon data including the time data and the place data is transmitted from the user's terminal apparatus 11 to the cash register apparatus at accounting corner. In this case, the advertisement owner can research the purchase action of the user bringing the terminal apparatus 11 and can collect effective data useful for sales strategy. Concretely speaking, by using a clock calendar function equipped in the place information acquisition unit 2 or an intelligent terminal apparatus, in case of receiving the discount coupon, the terminal apparatus 11 obtains the reception time data and the place data and stores these data with the discount coupon in the information memory 4. Alternatively, when the short distance wireless communication means transmits the discount coupon within close range area, the clock calender data and the place data related to the set point of the short distance wireless communication means may be additionally transmitted with the discount coupon.

In the above-mentioned example, in case of accounting the commodities by the cash register apparatus, the user's terminal apparatus 11 supplies the discount coupon to the cash register apparatus. However, the user's terminal apparatus 11 supplies the discount coupon at an entrance of the supermarket. When the user bringing the terminal apparatus 11 passes through an object commodity of the discount coupon, the wireless traffic means such as " Bluetooth" informs the terminal apparatus 11 that the object commodity exists near the user. In this way, the user is easily aware of the existence of the object commodity.

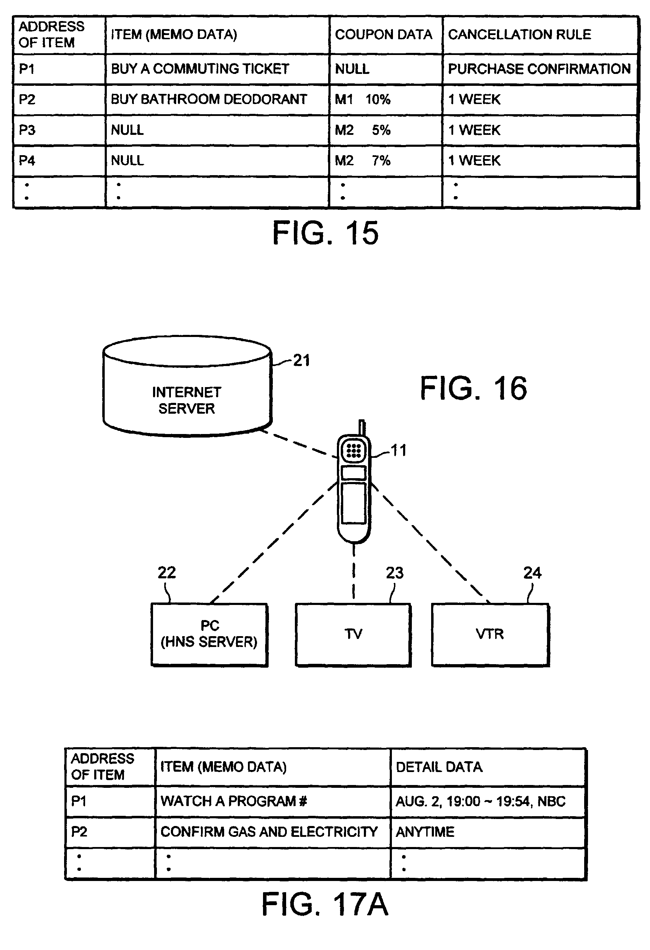

Furthermore, as shown in Fig. 15, the information memory 4 may additionally store cancellation rule. The information control unit 7 cancels the memo data and the coupon data corresponding to the cancellation rule in the information memory 4 and may cancel the place data corresponding to the cancellation rule in the area dependent information memory 3. When the memo data and the coupon data in the user's terminal apparatus are activated at suitable place such as the entrance of the supermarket or the cash register apparatus, the information control unit 7 automatically deletes these data from the information memory 4. In this way, useless data is not stored for a long time. Alternatively, the memo data and the coupon data may be automatically deleted after passing a predetermined period (for example, 1 week) from the storing time of the data. In this case, even if the user does not purchase the object commodity, and the memo data and the coupon data are not activated, these data are deleted without fail. In short, these data do not monopolize the memory resources for a long time.

Furthermore, in case of purchase of commuting ticket, the memo data "buy a commuting ticket" may be stored for a long time till the purchase of a commuting ticket is confirmed, and this memo data may be informed to the user whenever the user arrives at the station.

In this way, in the second embodiment, it is not necessary for the user to diligently watch the advertisement in a newspaper or a magazine. The user can automatically obtain necessary coupon data through the terminal apparatus and easily utilize the discount coupon without fail. Furthermore, the advertisement server site can understand a detail trend from where the coupon is obtained and when and where the coupon is actually used by the user. In short, a convenient system to research the purchase actions of customers and to be utilized for commercial activity is composed.

As mentioned-above, in the second embodiment, the coupon data is put to practical use by the user's terminal apparatus. In the third embodiment, the memo data is associated by depending on the place through a network in home. Fig. 16 is a system component according to the third embodiment. The terminal apparatus 11 as the area dependent information control apparatus of the third embodiment is basically the same as the terminal apparatus of the second embodiment shown in Fig. 12. As a difference, the terminal apparatus 11 of the third embodiment is communicatable to TV 23, VTR 24, PC (personal computer) 22, or HNS (home network server) previously set in the home and can subscribe for program. In the second embodiment, the terminal apparatus 11 includes the adhoc network to the cash register apparatus of the supermarket and the local EC server of the station, and accesses to the adhoc network. However, in the third embodiment, the terminal apparatus 11 can communicate with TV 23, VTR 24, PC 22, and HN server previously set in the home. In addition to this, the terminal apparatus 11 can communicate to the internet server 21. The access to the internet server is executed through a public network.

For example, while the user watches an article of broadcast program such as TV magazine, the user is interested in a program # and utters "I want to watch a program #." to the terminal apparatus 11. The information control unit 7 makes the information memory 4 store "watch a program #" as the memo data as shown in Fig. 17A. In this example, the memo data "watch a program #" is stored at address P1. Accordingly, this memo data is managed with the address P1.

Next, the information control unit 7 examines when the program # is broadcasted through the internet. As a result, for example, the information control unit 7 obtains a schedule data that "the program # is broadcasted in Aug. 2, at 19:00 ∼ 19:54, by NBC network" from the internet. As shown in Fig. 17A, the information control unit 7 makes the information memory 4 store "Aug. 2, 19:00 ∼ 19:54, NBC" as the detail data at the address P1. The place data in which the memo data is associated is registered in the area dependent information memory 3 by the information control unit 7 as follows.

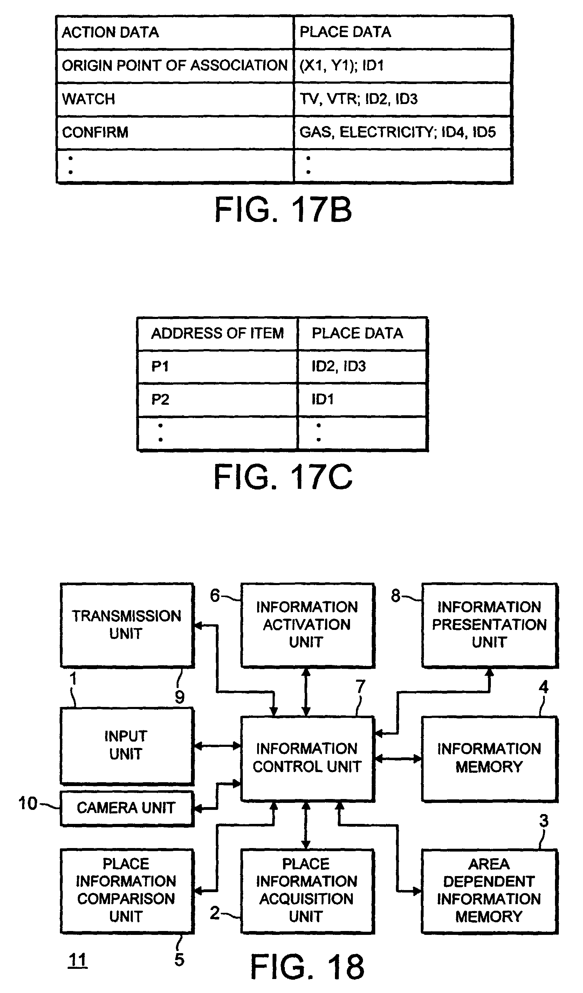

The information control unit 7 includes a function to decide whether the memo data includes characters of action data by referring to the correspondence table. As shown in Fig. 17B, the correspondence table stores the characters of the action data by unit of the origin point or the object related to the action. For example, in case of deciding the characters of "watch a program #", the word "watch" is decided as the action data. However, a kind of the object to be watched is different by the place in which the user watches the object. Accordingly, the origin point of association, i. e., where a start trigger related to the action "watch" is generated, is regarded as one element of deciding the object. If the origin point is a position of the user's house, the position data "(X1, Y1)" and ID of the user's house "ID1" are stored as the place data. In addition to this, the action data "watch", the object name and ID of each object to be watched, are correspondingly stored.

In Fig. 17B, TV (television image receiving apparatus) and VTR (video tape recorder) are registered as the object to be watched, a set position of TV is ID2, and a set position of VTR is ID3. If the information control unit 7 decides the characters "watch a program #" in home by referring to the correspondence table, the place data of the object to be watched is ID2 and ID3. Accordingly, as shown in Fig. 17C, the place data "ID2, ID3" are stored at address P1 corresponding to the memo data "watch a program #" in the area dependent information memory 3. At the time of "Aug. 2, 19:00 ∼ 19:54", the information control unit 7 makes VTR start to record the program # whose channel is NBC. On the other hand, if it is confirmed that the user is at home at this time, the information control unit 7 turns the TV on, and the program # is automatically broadcasted by TV. After the program # is broadcasted, the memo data and the detail data are deleted. If it is confirmed that the user is not in the home at this time, the TV does not turn on and only the VTR records the program # as mentioned-above.

Furthermore, the origin point of association is previously set as the front door of the house. In this case, when the user takes one step from the front door to go out, the memo data corresponding to the detail data " anytime" is informed to the user as shown in Fig. 17A. A content of this memo data is "confirm gas and electricity". Accordingly, the user can confirm whether he/she forgets to turn off the gas and the electricity when he/she begins to go out. The memo data corresponding to "anytime" may be permanent data not deleted eternally. In this case, the memo data are not deleted even if a predetermined period is passed. As mentioned-above, in the third embodiment, it is prevented that the user fails to watch a desired TV program regardless of being home or not.

In the first embodiment, the user inputs the shopping memo to the terminal apparatus by utterance. When the user bringing the terminal apparatus comes near the executive place of the shopping, the terminal apparatus informs the shopping memo to the user. In the second embodiment, the terminal apparatus automatically obtains the discount coupon through a network such as the internet and puts to practice the discount coupon when the user purchases at the store. In the fourth embodiment, the user directly inputs an image of the advertisement by a camera unit in order to register the memo data in the advertisement. In short, by inputting the image of the advertisement, the shopping memo or the coupon data are automatically obtained.

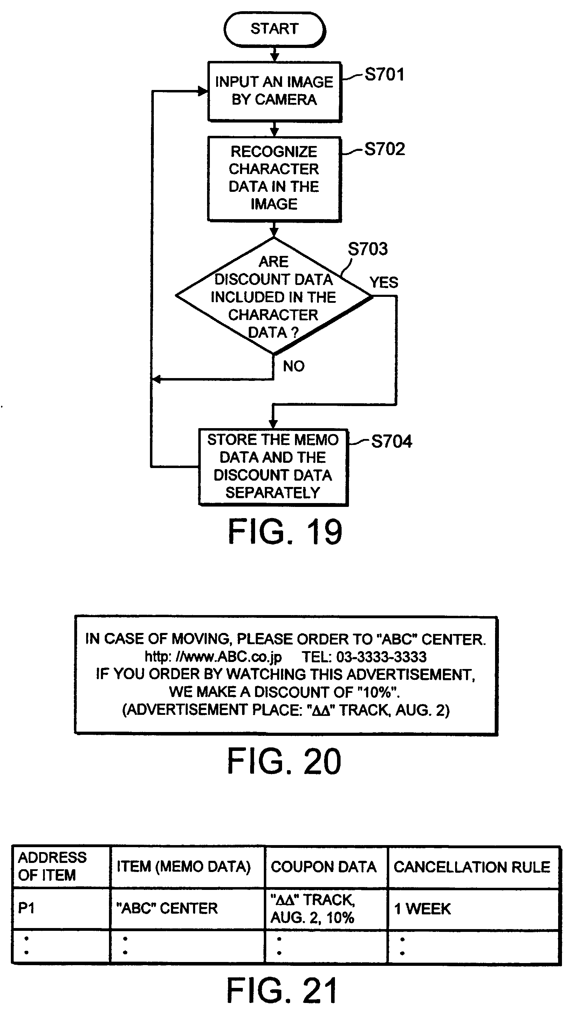

Fig. 18 is a block diagram of the area dependent information control apparatus according to the fourth embodiment. In comparison with components of the second embodiment in Fig. 12, a camera unit 10 is added. Fig. 19 is a flow chart of processing of registering information according to the fourth embodiment. In Fig. 18, the camera unit 10 is, for example, a CCD camera and includes a function to input an image of an object. In order to process the image data, the information control unit 7 includes a character recognition means to obtain the character data from the image data. In general, the character recognition means recognizes not only the character but also columns in document and combines the recognition result of the character with the recognition result of the column in order to recognize structure of the document. The information control unit 7 includes this kind of character recognition means.

First, assume that the user bringing the terminal apparatus 11 finds an advertisement shown in Fig. 20 in a train while the user goes out. In the prior art, if the user is interested in the content of this advertisement, he/she must make a memo of the content. However, in the fourth embodiment, the user inputs the image of this advertisement by using the camera unit 10 (S701). The information control unit 7 recognizes character data in the input image by using the character recognition means (S702). As mentioned-above, present character recognition means can recognize the character and the column of the advertisement in the image, and recognize the structure of the advertisement in the image. Accordingly, in case of recognizing the advertisement shown in Fig. 20, it is not necessary for the user to indicate a line position to be recognized in the image. The information control unit 7 examines whether the discount data such as the coupon is included in the recognition data (S703). If the discount data is included in the recognition result, the coupon data and the memo data in the recognition data are separately stored in the information memory 4 as shown in Fig. 21 (S704).

In the advertisement shown in Fig. 20, an advertisement owner and the coupon data are represented. " Aug. 2" is the data when this advertisement is published. In order to use the discount coupon, assume that the user must inform the place data " △ △ track" of the train, the date data "Aug. 2", and the discount coupon ratio "10%" to the advertisement owner according to the coupon regulation. The information control unit 7 checks whether the discount coupon data is included in the character data as the recognition result. If the discount coupon data is included in the character data, the coupon data and the memo data (for example, name of the advertisement owner) are separately stored in the information memory 4 as shown in Fig. 21. In this example, " △ △ track", "Aug. 2", " 10%" are extracted as the coupon data, and stored at address P1 in the information memory 4. In addition to this, ""ABC" center" as the name of advertisement owner is stored as the memo data, and the cancellation rule previously determined is stored at the address P1. In order to check whether the coupon data is included in the character data, semantics analysis technique is used. Alternatively, in case of the advertisement including the coupon data, the data arrangement format in the advertisement is often predetermined. In short, it is regulated that which area includes which type of the data. Accordingly, the coupon data and the memo data may be separately extracted by using a template.

In the fourth embodiment, the camera unit 10 can also input the image of a barcode and information of the target commodity. Accordingly, if the user continually purchases a plurality of commodities, the user need not make a memo of the name of the plurality of commodities. The memo data extracted from the character data of the recognition result is put to practical use in the same way as in the second embodiment.

As mentioned-above, in the fourth embodiment, by simple operation for the user to take a photograph of the advertisement, the coupon data and the memo data are automatically created. Accordingly, the user's memo input is simply executed and the use condition greatly improves.

As mentioned-above, in the present invention, the user's request data in daily life is managed by the executive place data and informed to the user. In short, the request data executable by the user in the present place are picked up and informed to the user. In PIM (personal information management) of the prior art, the personal data is managed by the time such as scheduler. However, in the management along the time axis, it is difficult that the request data such as the shopping memo, the discount coupon, and the purchase points (my ledger) in the daily life are managed. However, in the present invention, the request data is managed not by time but by two-dimensional place data and timely informed to the user. Accordingly, the user can easily utilize the request data such as the shopping memo, the discount coupon, and the purchase points at the suitable place.

A memory can be used to store instructions for performing the process described above. The process may be performed with the aid of a general purpose computer or microprocessor. Such a memory can thus be a CD-ROM, floppy disk, hard disk, magnetic tape, semiconductor memory, and so on.

Other embodiments of the invention will be apparent to those skilled in the art from consideration of the specification and practice of the invention disclosed herein. It is intended that the specification and examples be considered as exemplary only, with the true scope and spirit of the invention being indicated by the following claims.

## Claims

1. An area dependent information control apparatus, comprising:
a place data acquisition unit configured to acquire location data of a user's present position;
an information memory configured to store user request data;
an area dependent information memory configured to store position data of service places corresponding to the request data;
a place comparison unit configured to compare the location data acquired by said place data acquisition unit with the position data stored in said area dependent information memory, and to extract the request data corresponding to the position data matched with the location data from said information memory; and
a presentation unit configured to inform the user of the request data extracted by said location comparison unit.

2. The area dependent information control apparatus according to claim 1,
wherein said area dependent information memory additionally stores a permission limit as a radius of a circle whose center point is the position data, and
wherein said place comparison unit decides whether the location data is included in the circle for each position data.

3. The area dependent information control apparatus according to claim 1,
wherein said area dependent information memory stores an identification specially representing the service place,
wherein said place data acquisition unit acquires the identification transmitted from the service place as the location data, and
wherein said place comparison unit compares the identification aquired by said place data acquisition unit with each identification stored in said area dependent information memory.

4. The area dependent information control apparatus according to claim 1,
wherein the request data of the user includes a shopping memo, a discount coupon of a commodity, or purchase point data.

5. The area dependent information control apparatus according to claim 4,
further comprising an information control unit configured to collect action data including a noun from the user's daily life and an institution name of a service place of the action data, to acquire position data of the institution name in the user's actual environment, and to correspondingly store the action data and the position data in a table.

6. The area dependent information control apparatus according to claim 5,
further comprising a speech input unit configured to recognize the user's speech, and
wherein said information control unit compares the recognition result of the user's speech with action data in the table, and, if the recognition result matches the action data, extracts the position data corresponding to the matched action data from the table.

7. The area dependent information control apparatus according to claim 6,
wherein said information control unit stores the recognition result as the request data in said information memory, and stores the extracted position data in said area dependent information memory, the recognition result and the extracted position data are correspondingly stored by the same address.

8. The area dependent information control apparatus according to claim 6,
wherein said area dependent information control apparatus is a portable handy terminal,
wherein said speech input unit is a microphone and said presentation unit is a headphone each equipped in the portable handy terminal.

9. The area dependent information control apparatus according to claim 8,
wherein said place data acquisition unit uses different acquisition methods indoors and outdoors.

10. The area dependent information control aparatus according to claim 1,
further comprising a transmission unit configured to exchange information, and
wherein said information memory additionally stores received information corresponding to the request data through said transmission unit, the received information including a discount coupon of a commodity described in the request data.

11. The area dependent information control apparatus according to claim 10,
wherein said information control unit extracts the discount coupon from said information memory in case of settling an account of the commodity for purchase, and outputs the discount coupon to an account office through said transmission unit.

12. The area dependent information control apparatus according to claim 11,
wherein, if said transmission unit receives purchase point data obtained by purchasing the commodity from the account office,
said information memory additionally stores the purchase point data corresponding to the request data including the commodity name.

13. The area dependent information control apparatus according to claim 12,
wherein said information control unit extracts the purchase point data from said information memory in case of settling an account of the commodity for next purchase, and outputs the purchase point data to an account office through said transmission unit.

14. The area dependent information control apparatus according to claim 5,
wherein said area dependent information memory additionally stores a cancellation rule corresponding to the request data, the cancellation rule representing a valid condition, and
wherein said information control unit cancels the request data stored in said information memory or the position data stored in said area dependent information memory by referring to the cancellation rule.

15. The area dependent information control apparatus according to claim 14,
wherein the cancellation rule includes a decision whether the request data is informed to the user, or a predetermined valid term.

16. The area dependent information control apparatus according to claim 1,
further comprising a transmission unit configured to communicate to a network inside and outside a home,
wherein the request data includes program data to be broadcasted on audio visual equipment, and wherein the position data corresponding to the request data represents the audio visual equipment in the home.

17. The area dependent information control apparatus according to claim 16,
wherein said transmission unit acquires a broadcast schedule corresponding to the program data through the network, and
wherein said information memory additionally stores the broadcast schedule corresponding to the program data.

18. The area dependent information control apparatus according to claim 17,
wherein said information control unit controls the audio visual equipment to broadcast the program at a timing of the schedule data if the user is at home, and controls the audio visual equipment to record the program at the timing of the schedule data if the user is not at home.

19. The area dependent information control apparatus according to claim 1,
further comprising an image input unit configured to input an image including an object, and
wherein said information control unit analyzes character data included in the input image, and, if the character data represents content of an advertisement, extracts a proper noun, discount data, and place data from the advertisement.

20. The area dependent information control apparatus according to claim 19,
wherein said information control unit correspondingly stores the proper noun as the request data, and the discount data and the place data as coupon data in said information memory.

21. A method for controlling area dependent information, comprising the steps of:
storing user request data in an information memory;
storing position data of service places corresponding to the request data in an area dependent information memory;
acquiring location data of a user's present position;
comparing the location data with the position data stored in the area dependent information memory;
extracting the request data corresponding to the position data matched with the location data from the information memory; and
informing the user of the extracted request data.

22. A computer readable memory containing computer readable instructions in a system to control area dependent information, comprising:
an instruction means for causing a computer to store user request data in an information memory;
an instruction means for causing a computer to store position data of service places corresponding to the request data in an area dependent information memory;
an instruction means for causing a computer to acquire location data of a user's present position;
an instruction means for causing a computer to compare the location data with the position data stored in the area dependent information memory;
an instruction means for causing a computer to extract the request data corresponding to the position data matched with the location data from the information memory; and
an instruction means for causing a computer to inform the user of the extracted request data.
